# EUROPEAN PATENT APPLICATION

(11) **EP 3 936 218 A1**
(43) Date of publication of application: **12.01.2022**
(21) Application number: 21184506.0
(22) Date of filing: 08.07.2021
(51) Int. Cl.: B01D 53/04

(54) **MONOLITHIC SWING BED ADSORPTION APPARATUS**

(30) Priority: 08.07.2020 US 202016923694
(71) Applicant: Hamilton Sundstrand Corporation, Charlotte, NC 28217-4578 (US)
(72) Inventor: ZAFFETTI, Mark A., Suffield, 06078 (US); STRANGE, Jeremy M., Windsor, 06095 (US); OCHS, Elspeth M., Middletown, 06457 (US)
(74) Representative: Dehns

(57) **Abstract**

A monolithic swing bed absorption apparatus including a first bed (240a). The first bed including a bed housing (242) including a first side and a second side, a first manifold section (250) extending from the first side to the second side within the bed housing (242), a filtration section (270) extending from the first side to the second side within the bed housing, and a second manifold section extending from the first side to the second side within the bed housing. The filtration section (270) being interposed between the first manifold section and the second manifold section. The monolithic swing bed absorption apparatus (200) is a single piece including a unitary structure.

## Description

### BACKGROUND

The subject matter disclosed herein relates generally to the field of removing carbon dioxide gas, and specifically to an apparatus for absorbing and removing carbon dioxide gas from an enclosed space.

Life support systems that are utilized in enclosed spaces such as submarines, spacecraft or space suits require the continuous removal of carbon dioxide. A regenerative carbon dioxide removal system is utilized for this purpose and commonly includes amine beds that are placed in contact with a flow of carbon dioxide laden air. The amine beds adsorb carbon dioxide from the air stream through commonly understood chemical processes and reactions.

An amine bed is utilized until it is saturated to a selected saturation level. The selected saturation level can be a saturation level where the amine bed can no longer efficiently remove carbon dioxide from an air stream or any saturation level less than the saturation level where the amine bed can no longer efficiently remove carbon dioxide from the air stream. Another amine bed is then switched into contact with the carbon dioxide laden air stream. The saturated amine bed is then desorbed to expel carbon dioxide in preparation for the next cycle.

### BRIEF SUMMARY

According to one embodiment, a monolithic swing bed absorption apparatus is provided. The monolithic swing bed absorption including a first bed. The first bed including a bed housing including a first side and a second side, a first manifold section extending from the first side to the second side within the bed housing, a filtration section extending from the first side to the second side within the bed housing, and a second manifold section extending from the first side to the second side within the bed housing. The filtration section being interposed between the first manifold section and the second manifold section. The monolithic swing bed absorption apparatus is a single piece including a unitary structure.

In addition to one or more of the features described above, or as an alternative, further embodiments may include that the monolithic swing bed absorption apparatus is a monolithic structure formed via an additive manufacturing technique.

In addition to one or more of the features described above, or as an alternative, further embodiments may include that the additive manufacturing technique is powder bed fusion additive manufacturing.

In addition to one or more of the features described above, or as an alternative, further embodiments may include that the first bed further includes a first screen portion interposed between the first manifold section and the filtration section, and a second screen portion interposed between the filtration section and the second manifold section.

In addition to one or more of the features described above, or as an alternative, further embodiments may include that the first manifold section, the filtration section, and the second manifold section have an engineered open cell structural geometry configured to increase flow and filtration.

In addition to one or more of the features described above, or as an alternative, further embodiments may include that the open cell structural geometry is a Kelvin cell geometry.

In addition to one or more of the features described above, or as an alternative, further embodiments may include that the bed housing further includes a first opening in the first side of the bed housing. The first opening in the first side being aligned with the first manifold section. The bed housing further includes a second opening in the first side of the bed housing. The second opening in the first side being aligned with the filtration section. The bed housing further includes a first opening in the second side of the bed housing. The first opening in the second side being aligned with the second manifold section.

In addition to one or more of the features described above, or as an alternative, further embodiments may include a first end portion.

In addition to one or more of the features described above, or as an alternative, further embodiments may include a second bed and a parting sheet interposed between the first bed and the second bed.

In addition to one or more of the features described above, or as an alternative, further embodiments may include a first end portion, a second bed, a third bed, a fourth bed, and a second end portion located opposite the first end portion.

According to another embodiment, a method of manufacturing a monolithic swing bed absorption apparatus is provided. The method including: forming a first bed, including: forming, using an additive manufacturing technique, a bed housing including a first side and a second side; forming, using the additive manufacturing technique, a first manifold section extending from the first side to the second side within the bed housing; forming, using the additive manufacturing technique, a filtration section extending from the first side to the second side within the bed housing; and forming, using the additive manufacturing technique, a second manifold section extending from the first side to the second side within the bed housing, the filtration section being interposed between the first manifold section and the second manifold section. The monolithic swing bed absorption apparatus is a single piece including a unitary structure.

In addition to one or more of the features described above, or as an alternative, further embodiments may include that the additive manufacturing technique is powder bed fusion additive manufacturing.

In addition to one or more of the features described above, or as an alternative, further embodiments may include that the monolithic swing bed absorption apparatus is a monolithic structure formed by the additive manufacturing technique.

In addition to one or more of the features described above, or as an alternative, further embodiments may include that the forming the first bed further includes: forming, using the additive manufacturing technique, a first screen portion interposed between the first manifold section and the filtration section; and forming, using the additive manufacturing technique, a second screen portion interposed between the filtration section and the second manifold section.

In addition to one or more of the features described above, or as an alternative, further embodiments may include that the first manifold section, the filtration section, and the second manifold section have an engineered open cell structural geometry configured to increase flow and filtration.

In addition to one or more of the features described above, or as an alternative, further embodiments may include that the open cell structural geometry is a Kelvin cell geometry.

In addition to one or more of the features described above, or as an alternative, further embodiments may include that the forming the first bed further includes: forming, using the additive manufacturing technique, a first opening in the first side of the bed housing, the first opening in the first side being aligned with the first manifold section; forming, using the additive manufacturing technique, a second opening in the first side of the bed housing, the second opening in the first side being aligned with the filtration section; and forming, using the additive manufacturing technique, a first opening in the second side of the bed housing, the first opening in the second side being aligned with the second manifold section.

In addition to one or more of the features described above, or as an alternative, further embodiments may include forming, using the additive manufacturing technique, a first end portion.

In addition to one or more of the features described above, or as an alternative, further embodiments may include forming, using the additive manufacturing technique, a second bed; and forming, using the additive manufacturing technique, a parting sheet interposed between the first bed and the second bed.

In addition to one or more of the features described above, or as an alternative, further embodiments may include forming, using the additive manufacturing technique, a first end portion; forming, using the additive manufacturing technique, a second bed; forming, using the additive manufacturing technique, a third bed; forming, using the additive manufacturing technique, a fourth bed; and forming, using the additive manufacturing technique, a second end portion located opposite the first end portion.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 illustrates an isometric view of a monolithic swing bed absorption apparatus, according to an embodiment of the present disclosure;
FIG. 2 illustrates an isometric view of a monolithic swing bed absorption apparatus with a second end portion removed, in accordance with an embodiment of the present disclosure; and
FIG. 3 illustrates a flow chart of a method of manufacturing the monolithic swing bed absorption apparatus, in accordance with an embodiment of the present disclosure.

### DETAILED DESCRIPTION

A detailed description of one or more embodiments of the disclosed apparatus and method are presented herein by way of exemplification and not limitation with reference to the Figures.

A multi-piece swing bed absorption apparatus for the amine beds are typically constructed utilizing a complex arrangement of a multitude of brazed amine support features, filters, and screens. The assembly process is complex and time consuming due to the multitude of parts involved. The brazing process is a process that requires the entire housing to be exposed to a temperature sufficient to form the desired brazed joints and leaves being visible joints and seams. Embodiments disclosed herein seek to simplify the assembly process by reducing the number of components and eliminating brazing entirely and eliminating any joints on the structure that are left over from brazing.

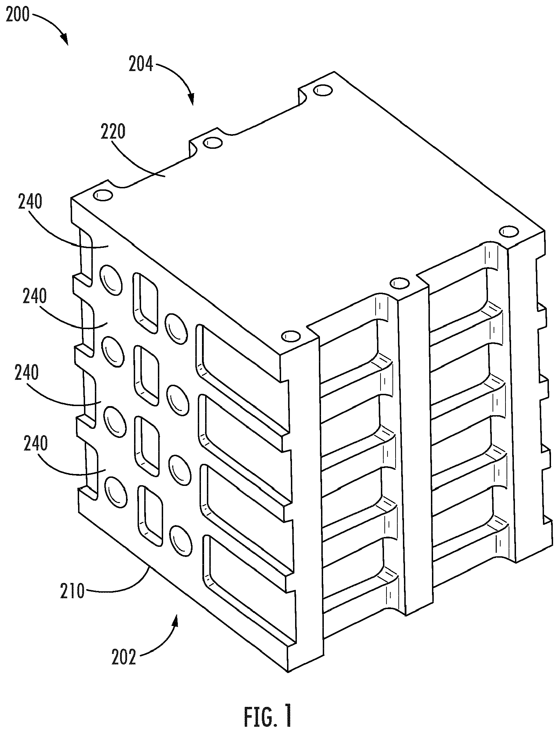

Referring now to FIG. 1, an isometric view of a monolithic swing bed absorption apparatus 200 is illustrated, according to an embodiment of the present disclosure. The monolithic swing bed absorption apparatus 200 is a monolithic structure formed via an additive manufacturing technique. The monolithic swing bed absorption apparatus 200 is a monolithic structure rather than being assembled from separate individually formed components that are then assembled, as in previous designs. The term monolithic may be defined as an object that is cast or formed as single piece without joints or seams. In other words, the monolithic swing bed structure 200 is formed as a single piece comprising a unitary structure. In an embodiment, the monolithic swing bed absorption apparatus 200 has no joints or seams. The monolithic swing bed absorption apparatus 200 may be manufactured or formed via an additive manufacturing technique known to one of skill in the art. In an embodiment, the monolithic swing bed absorption apparatus 200 may be manufactured by growing the structure all at once or one layer at a time. In an embodiment, the monolithic swing bed absorption apparatus 200 may be manufactured by powder bed fusion additive manufacturing.

Advantageously, by manufacturing the monolithic swing bed absorption apparatus 200 as a monolithic structure using additive manufacturing it eliminates the manufacturing and/or procurement of all the separate components in the multi-piece assembly, which saves cost and time. Also advantageously, by manufacturing the monolithic swing bed absorption apparatus 200 as a monolithic structure using additive manufacturing it eliminates the need to braze all of the separate components of a multi-piece swing bed absorption apparatus, which saves cost and time. Also advantageously, by avoiding the need to braze any components together, different materials may be utilized for the monolithic structure that would have not be utilized previously due to the excess heat involved in brazing. Additionally, the potential for leaks or leak paths from numerous brazed joints is eliminated and thus an all-around more robust design is created.

The monolithic swing bed absorption apparatus 200 is composed of two or more beds 240. The two or more beds 240 are formed stacked on top of each other. The beds 240 may be formed one bed 240 at a time, such as, for example, starting from the second end portion 220 and moving to the first end portion 210, or starting from the first end portion 210 and moving to the second end portion 220. The monolithic swing bed absorption apparatus 200 of FIG. 1 includes four beds 240. The beds 240 are sandwiched together by a first end portion 210 (i.e., bottom end portion according to the illustrated orientation) and a second end portion 220 (i.e., a top end portion according to the illustrated orientation). The first end portion 210 is located at a first end 202 of the monolithic swing bed absorption apparatus 200 and the second end portion 220 is located at a second end 204 of the monolithic swing bed absorption apparatus 200.

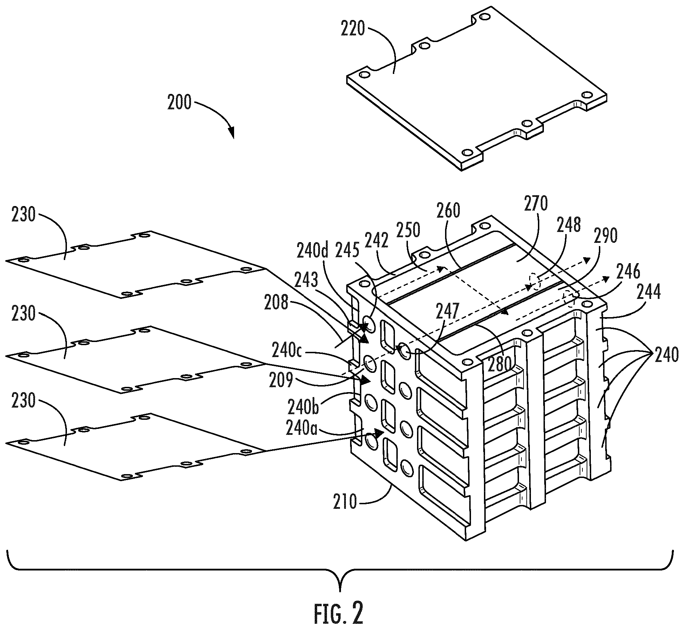

Referring now to FIG. 2, an isometric view of a monolithic swing bed absorption apparatus 200 is illustrated with the second end portion 220 of FIG. 1 removed from its assembled position, according to an embodiment of the present disclosure. The monolithic swing bed absorption apparatus 200 is composed of two or more beds 240. Each of the beds 240 is composed of a bed housing 242, a first manifold section 250, a first screen portion 260, a filtration section 270, a second screen portion 280, a second manifold section 290, and a parting sheet 230. The filtration section 270 contains amine-based sorbent beads to absorb carbon dioxide.

It is understood that while the exemplary monolithic swing bed absorption apparatus 200 of FIG. 2 includes four beds 240, the embodiments disclosed herein may be applicable to a monolithic swing bed absorption apparatus 200 with two or more beds 240. The beds 240 include a first bed 240a, a second bed 240b, a third bed 240c, and a fourth bed 240d. The parting sheet 230 separates two adjacent beds 240. A parting sheet 230 is also interposed between the first bed 240a and the second bed 240b, the second bed 240b and the third bed 240c, the third bed 240c and the fourth bed 240d.

The filtration section 270 is interposed between the first manifold section 250 and the second manifold section 290. The first screen portion 260 is interposed between the first manifold section 250 and the filtration section 270. The second screen portion 280 is interposed between the filtration section 270 and the second manifold section 290. Advantageously, since the first screen portion 260 is produced via additive manufacturing there is no need for a screen frame. Previously designs that were produced via brazing techniques required a separate screen and a separate screen frame be assembled together. The screen frame would provide structural support to the screen, which is no longer necessary in the present design. Also advantageously, since the second screen portion 280 is produced via additive manufacturing there is no need for a screen frame.

Through the use of additive manufacturing, material of the first manifold section 250, the filtration section 270, and the second manifold section 290 are no longer limited to a foam or foam-like material, as in previous designs. The first manifold section 250, the filtration section 270, and the second manifold section 290 may be shaped by the additive manufacturing technique to have an engineered open cell structural geometry configured to increase flow and filtration over previous designs. In other words, the engineered open cell structural geometry performs flow optimization and filtration. The open cell structural geometries may include but are not limited to a Kelvin cell geometry. In an embodiment, the first manifold section 250 may have the same engineered open cell structural geometry as the second manifold section 290.

The bed housing 242 includes a first opening 245 in a first side 243 of the bed housing 242 and a second opening 247 in the first side 243 of the bed housing 242. The first opening 245 is aligned with the first manifold section 250 and the second opening 247 is aligned with the filtration section 270.

The bed housing 242 includes a first opening 246 in a second side 244 of the bed housing 242 and a second opening 248 in the second side 244 of the bed housing 242. The first opening 246 is aligned with the second manifold section 290 and the second opening 248 is aligned with the filtration section 270. In an embodiment, the second opening 248 may not be present.

Air 208 to be filtered is configured to flow into the monolithic swing bed absorption apparatus 200 through the first opening 245 in the first side 243 of the bed housing 242, through the first manifold section 250, then through the first screen portion 260, then through the filtration section 270, then through the second screen portion 280, then through the second manifold section 290 and then through a first opening 246 in the second side 244 of the bed housing 242 to exit the monolithic swing bed absorption apparatus 200.

The filtration section 270 is desorbed to expel carbon dioxide in preparation for the next cycle by exposing the bed to a vacuum.

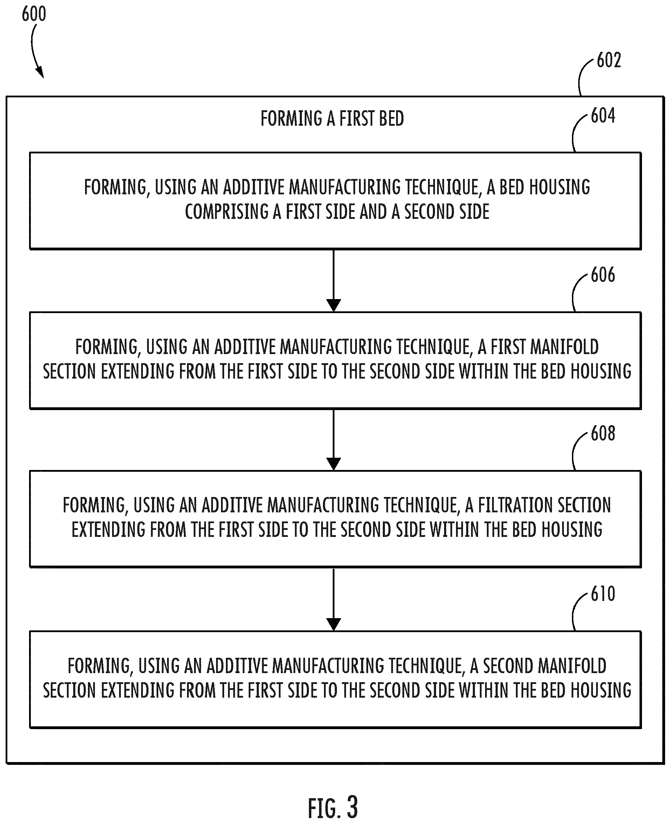

Referring now to FIG. 3, with continued reference to FIGS. 1 and 2, a flow chart of method 600 of manufacturing the monolithic swing bed absorption apparatus 200 is illustrated, in accordance with an embodiment of the disclosure.

At block 602, a first bed 240a is formed comprising the steps of blocks 604, 606, 608, and 610. In an embodiment, blocks 604, 606, 608, and 610 may occur simultaneously or near simultaneously as each of the bed housing 242, the first manifold section 250, the filtration section 270, and the second manifold section 290 are built up in layers.

At block 604, a bed housing 242 comprising a first side 243 and a second side 244 is formed using an additive manufacturing technique. At block 606, a first manifold section 250 extending from the first side 243 to the second side 244 is formed within the bed housing 242 using the additive manufacturing technique. At block 608, a filtration section 270 extending from the first side 243 to the second side 244 is formed within the bed housing 242 using the additive manufacturing technique. At block 610, a second manifold section 290 extending from the first side 243 to the second side 244 is formed within the bed housing 242 using the additive manufacturing technique. The filtration section 270 being interposed between the first manifold section 250 and the second manifold section 290.

The monolithic swing bed absorption apparatus 200 is a single piece comprising a unitary structure.

The monolithic swing bed absorption apparatus 200 is a monolithic structure formed by the additive manufacturing technique. In an embodiment, the additive manufacturing technique is powder bed fusion additive manufacturing.

The method 600 may further comprise that a first screen portion 260 is formed interposed between the first manifold section 250 and the filtration section 270 using the additive manufacturing technique. The method 600 may further comprise that a second screen portion 280 is formed interposed between the filtration section 270 and the second manifold section 290 using the additive manufacturing technique. In an embodiment, the first manifold section 250, the filtration section 270, and the second manifold section 290 have an engineered open cell structural geometry configured to perform filtration. In another embodiment, the open cell structural geometry is a Kelvin cell geometry. In is understood that the embodiments disclosed herein are applicable to geometries other than the Kelvin cell geometry.

The method 600 may further comprise that a first opening 245 is formed in the first side 243 of the bed housing 242 using the additive manufacturing technique. The first opening 245 in the first side 243 being aligned with the first manifold section 250. The method 600 may further comprise that a second opening 247 is formed in the first side 243 of the bed housing 242 using the additive manufacturing technique. The second opening 247 in the first side 243 being aligned with the filtration section 270. The method 600 may further comprise that a first opening 246 is formed in the second side 244 of the bed housing 242 using the additive manufacturing technique. The first opening 246 in the second side 244 being aligned with the second manifold section 290. The method 600 may further comprise that a second opening 248 is formed in the second side 244 of the bed housing 242 using the additive manufacturing technique. The second opening 248 in the second side 244 being aligned with the filtration section 270. The second opening 248 may not be present.

The method 600 may further comprise that a first end portion 210 is formed using the additive manufacturing technique.

The method 600 may further comprise that a second bed 240b is formed using the additive manufacturing technique and a parting sheet 230 interposed between the first bed 240a and the second bed 240b is formed using the additive manufacturing technique.

The method 600 may additionally comprise that a first end portion 210, a second bed 240b, a third bed 240c, a fourth bed 240d, and a second end portion 220 located opposite the first end portion 210 are each formed using the additive manufacturing technique.

While the above description has described the flow process of FIG. 3 in a particular order, it should be appreciated that unless otherwise specifically required in the attached claims that the ordering of the steps may be varied and the order of the steps may occur simultaneously or near simultaneously, such as in layers.

Technical effects and benefits of the features described herein include forming a monolithic swing bed absorption apparatus through additive manufacturing.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A monolithic swing bed absorption apparatus (200), comprising:
a first bed (240a) comprising:
a bed housing (242) comprising a first side and a second side;
a first manifold section (250) extending from the first side to the second side within the bed housing;
a filtration section (270) extending from the first side to the second side within the bed housing; and
a second manifold section (290) extending from the first side to the second side within the bed housing, the filtration section being interposed between the first manifold section and the second manifold section,
wherein the monolithic swing bed absorption apparatus is a single piece comprising a unitary structure.

2. The monolithic swing bed absorption apparatus of claim 1, wherein the monolithic swing bed absorption apparatus is a monolithic structure formed via an additive manufacturing technique, and optionally wherein the additive manufacturing technique is powder bed fusion additive manufacturing.

3. The monolithic swing bed absorption apparatus of any preceding claim, wherein the first bed further comprises:
a first screen portion interposed between the first manifold section and the filtration section; and
a second screen portion interposed between the filtration section and the second manifold section.

4. The monolithic swing bed absorption apparatus of any preceding claim, wherein the first manifold section, the filtration section, and the second manifold section have an engineered open cell structural geometry configured to increase flow and filtration.

5. The monolithic swing bed absorption apparatus of claim4, wherein the open cell structural geometry is a Kelvin cell geometry, and/or wherein the bed housing further comprises:
a first opening in the first side of the bed housing, the first opening in the first side being aligned with the first manifold section;
a second opening in the first side of the bed housing, the second opening in the first side being aligned with the filtration section; and
a first opening in the second side of the bed housing, the first opening in the second side being aligned with the second manifold section.

6. The monolithic swing bed absorption apparatus of any preceding claim, further comprising:
a first end portion.

7. The monolithic swing bed absorption apparatus of any preceding claim, further comprising:
a second bed; and
a parting sheet interposed between the first bed and the second bed.

8. The monolithic swing bed absorption apparatus of any preceding claim, further comprising:
a first end portion;
a second bed;
a third bed;
a fourth bed; and
a second end portion located opposite the first end portion.

9. A method (600) of manufacturing a monolithic swing bed absorption apparatus, the method comprising:
forming a first bed (240a), comprising:
forming, using an additive manufacturing technique, a bed housing (242a) comprising a first side and a second side;
forming, using the additive manufacturing technique, a first manifold section (250) extending from the first side to the second side within the bed housing;
forming, using the additive manufacturing technique, a filtration section (270) extending from the first side to the second side within the bed housing; and
forming, using the additive manufacturing technique, a second manifold section (290) extending from the first side to the second side within the bed housing, the filtration section being interposed between the first manifold section and the second manifold section,
wherein the monolithic swing bed absorption apparatus is a single piece comprising a unitary structure.

10. The method of claim 9, wherein the additive manufacturing technique is powder bed fusion additive manufacturing, and optionally wherein the monolithic swing bed absorption apparatus is a monolithic structure formed by the additive manufacturing technique.

11. The method of claim 9 or 10, wherein the forming the first bed further comprises:
forming, using the additive manufacturing technique, a first screen portion interposed between the first manifold section and the filtration section; and
forming, using the additive manufacturing technique, a second screen portion interposed between the filtration section and the second manifold section.

12. The method of any of claims 9 to 11, wherein the first manifold section, the filtration section, and the second manifold section have an engineered open cell structural geometry configured to increase flow and filtration, and optionally wherein the open cell structural geometry is a Kelvin cell geometry.

13. The method of any of claims 9 to 12, wherein the forming the first bed further comprises:
forming, using the additive manufacturing technique, a first opening in the first side of the bed housing, the first opening in the first side being aligned with the first manifold section;
forming, using the additive manufacturing technique, a second opening in the first side of the bed housing, the second opening in the first side being aligned with the filtration section; and
forming, using the additive manufacturing technique, a first opening in the second side of the bed housing, the first opening in the second side being aligned with the second manifold section.

14. The method of any of claims 9 to 13, further comprising:
forming, using the additive manufacturing technique, a first end portion, and/or further comprising:
forming, using the additive manufacturing technique, a second bed; and
forming, using the additive manufacturing technique, a parting sheet interposed between the first bed and the second bed.

15. The method of any of claims 9 to 14, further comprising:
forming, using the additive manufacturing technique, a first end portion;
forming, using the additive manufacturing technique, a second bed;
forming, using the additive manufacturing technique, a third bed;
forming, using the additive manufacturing technique, a fourth bed; and
forming, using the additive manufacturing technique, a second end portion located opposite the first end portion.
